# DEMANDE DE BREVET EUROPEEN

(11) **EP 2 071 184 A1**
(43) Date de publication de la demande: **17.06.2009**
(21) Numéro de dépôt: 08170991.7
(22) Date de dépôt: 08.12.2008
(51) Int. Cl.: F03G 6/06, F22B 1/16, F01K 25/08, F01K 3/00, F22B 1/00, F03G 6/00

(54) **Installation de production d'électricité à partir d'énergie solaire**

(30) Priorité: 10.12.2007 FR 0759682
(71) Demandeur: BOLD RIVER, 78230 Le Pecq (FR)
(72) Inventeur: Benaros, Pierre, 06110 La Cannet (FR)
(74) Mandataire: Decobert, Jean-Pascal

(57) **Abrégé**

Installation de génération d'énergie électrique comportant un circuit pour un fluide moteur, des moyens de chauffage du fluide moteur configurés pour vaporiser le fluide moteur, un système à turbine (2) couplé à un générateur (3) électrique, ledit système utilisant la phase vapeur du fluide moteur comme moyen moteur en vue de la production d'énergie, caractérisé par le fait que les moyens de chauffage comportent une pluralité de panneaux solaires (6) aptes à chauffer un fluide caloporteur, des moyens d'échange thermique entre le fluide caloporteur et le fluide moteur, des moyens de régulation (17) de la température du fluide moteur en entrée des moyens d'échanges thermiques.

## Description

La présente invention concerne une installation de génération d'énergie électrique en particulier pour la production d'électricité à partir d'énergie solaire pour des centrales solaires de puissance de l'ordre ou supérieure à 150 kW.

Dans ce cadre, on a déjà proposé diverses centrales exploitant l'énergie solaire comme c'est le cas du document FR-A1- 2 874 975 qui divulgue un dispositif de production d'énergie électrique utilisant des capteurs solaires pour obtenir de l'eau chaude le jour et des dissipateurs thermiques pour obtenir de l'eau froide la nuit. Une turbine fonctionnant en cycle de Hirn est couplée avec un alternateur qui permet de générer de l'électricité. En proposant un fonctionnement nocturne et diurne complexe avec de fortes pertes, une telle centrale présente un rendement si faible qu'elle est en pratique inutilisable.

On connaît par ailleurs le document US-A-4 767 705 une installation de génération électrique utilisant un cycle Rankine et employant deux fluides de travail à savoir d'une part de la naphtaline et d'autre part de l'eau, traités chacun par un cycle différent. Ces deux cycles fluidiques parallèles sont complexes et l'utilisation de la naphtaline nécessite de très hautes pressions ce qui engendre généralement des pertes élevées, pertes d'autant plus importantes qu'il y a nécessité d'échanges thermiques intenses entre le cycle naphtaline et le cycle eau par ailleurs difficile à vaporiser sans un apport d'énergie très élevé.

Il existe donc un besoin d'améliorer de manière générale le fonctionnement des centrales exploitant au moins partiellement l'énergie solaire comme source d'énergie. Une de ces améliorations peut passer par l'amélioration des rendements mais aussi par l'optimisation de la bonne marche des installations.

La présente invention s'inscrit dans ce cadre et propose à cet effet une installation améliorée pour la génération d'énergie électrique.

Plus précisément, suivant un premier aspect, cette installation dispose d'un moyen de régulation de son fonctionnement de sorte à permettre une continuité d'activité de l'installation malgré des variations notables des conditions extérieures en particulier liées à l'ensoleillement. A cet effet, des moyens de régulation en température d'entrée des moyens de chauffage d'un fluide sont prévus. Il peut par ailleurs être mis en oeuvre un système tampon apte à augmenter l'inertie thermique du fluide caloporteur, utilisé pour le chauffage du fluide moteur, de sorte que le fonctionnement est plus stabilisé que suivant l'état de la technique.

Suivant un autre aspect de l'invention, des moyens sont prévus pour adapter le fonctionnement de l'installation à différentes situations de travail qui dépendent en particulier de l'ensoleillement. Ainsi, le cycle du fluide moteur est adapté par l'utilisation de différentes pompes disposant chacune de paramètres de débit prédéterminés. En particulier, l'emploi de deux pompes de débit différent permet la définition de deux régimes d'activité de l'installation notamment suivant l'ensoleillement. Le couplage des pompes permet par ailleurs d'assurer un fonctionnement en régime maximal.

Suivant d'autres aspects de l'invention, le rendement de l'installation est optimisé par différents moyens additionnels.

Globalement, l'invention ici proposée assure d'une part une augmentation du rendement et d'autre part la possibilité d'un fonctionnement adaptable et régulier offrant une grande flexibilité au regard des variations climatiques et des besoins en fourniture d'énergie électrique.

Dans le même temps, la solution proposée par l'invention ne nécessite pas la mise en oeuvre de fluides ou de moyens thermodynamiques complexes susceptibles de rendre délicate et coûteuse la mise en oeuvre de l'installation.

D'autres buts et avantages apparaîtront au cours de la description qui suit qui présente un mode préféré de réalisation de l'invention cependant non limitatif.

Auparavant, il est rappelé que l'invention concerne une installation de génération d'énergie électrique comportant un circuit pour un fluide moteur, des moyens de chauffage du fluide moteur configurés pour vaporiser le fluide moteur, un système à turbine couplé à un générateur électrique, ledit système utilisant la phase vapeur du fluide moteur comme moyen moteur en vue de la production d'énergie, caractérisée par le fait que les moyens de chauffage comportent une pluralité de panneaux solaires aptes à chauffer un fluide caloporteur, des moyens d'échange thermique entre le fluide caloporteur et le fluide moteur, des moyens de régulation de la température du fluide moteur en entrée des moyens d'échanges thermiques.

Suivant des modes de réalisation préférés mais non limitatifs, cette installation est telle que :
- les moyens de régulation comportent un mélangeur en amont des moyens d'échange thermique, le mélangeur ayant une double entrée pour recevoir du fluide caloporteur chauffé et du fluide caloporteur refroidi, l'admission desdits fluides caloporteurs chauffé et refroidi étant contrôlée selon la température de sortie du mélangeur,
- les moyens de régulation comportent des vannes contrôlant l'admission des fluides caloporteurs chauffé et refroidi et des moyens de commande desdites vannes reliés à une sonde thermique en sortie du mélangeur,
- le fluide caloporteur refroidi est issu d'une zone du circuit de fluide caloporteur située en aval des moyens d'échange thermique,
- les moyens de chauffage comportent un réservoir tampon de stockage de fluide caloporteur chauffé entre la pluralité de panneaux solaires et les moyens d'échange thermique,
- le circuit de fluide moteur comporte une portion dédoublée en amont des moyens d'échange thermique, chaque segment de la zone dédoublée comporte une pompe, les pompes étant de puissance différente,
- chaque pompe a un débit nominal prédéterminé et fixant deux régimes de circulation du fluide moteur,
- les moyens de chauffage comportent un réservoir tampon de stockage de fluide caloporteur chauffé entre la pluralité de panneaux solaires et les moyens d'échange thermique.
- les pompes sont configurées pour pouvoir fonctionner simultanément pour fixer un troisième régime de circulation du fluide moteur
- le dispositif comporte un récupérateur configuré pour préchauffer le fluide moteur en amont des moyens de chauffage par échanges thermiques avec le fluide moteur en sortie de turbine et avant sa liquéfaction.
- les panneaux solaires comportent des capteurs thermiques de type U.

Les dessins ci-joints sont donnés à titre d'exemples et ne sont pas limitatifs de l'invention. Ils représentent seulement un mode de réalisation de l'invention et permettront de la comprendre aisément.

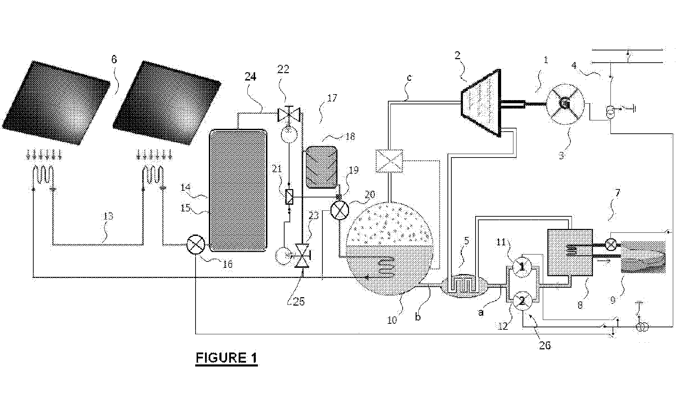

La figure 1 présente schématiquement un mode de réalisation préféré de l'invention.

Dans le cas représenté, deux fluides sont mis en oeuvre, dont un fluide moteur apte à entraîner en rotation une ou plusieurs turbines 2.

On pourra choisir, à titre d'exemple, un alcane et en particulier du propane.

L'autre fluide impliqué dans l'installation selon l'invention assure le transport de calories depuis une pluralité de panneaux solaires 6 vers des moyens d'échange thermique aptes à chauffer le fluide moteur. Le fluide caloporteur utilisé à cet effet peut par simplicité être de l'eau mais tout autre fluide peut convenir suivant les conditions thermodynamiques applicables.

En sortie, la turbine 2 entraîne l'axe d'un générateur 3 qui peut être un alternateur de type courant, le générateur 3 assurant la délivrance d'énergie électrique dans un réseau 4 qui peut être privé ou public.

Le cycle du fluide moteur s'opère dans le cas illustré comme suit.

A l'état liquide, le fluide moteur est admis dans un évaporateur réalisant ici les moyens d'échange thermique entre le fluide caloporteur et le fluide moteur.

A l'entrée dans l'évaporateur 10, au point B, dans le cas du propane, la température est par exemple de l'ordre de 30° à une pression de l'ordre de 12 Bars. L'échauffement produit par l'échange thermique issu du fluide caloporteur assure l'évaporation du fluide moteur. La phase vapeur est alors admise en entrée de la turbine 2. Au point C correspondant, la température du propane peut atteindre environ 85° à une pression sensiblement de 12 Bars.

A la sortie de la turbine 2, dans le cas du propane, au point D, la température est descendue à 40° environ ainsi que la pression qui est de l'ordre de 2,4 Bars.

Dans le cas illustré, un échange thermique est produit au niveau d'un récupérateur 5 dans lequel circule le fluide moteur issu de la turbine. Est réalisé un échange thermique avec le fluide moteur en amont de l'évaporateur 10. En sortie du récupérateur 5, le fluide moteur issu de la turbine 2 présente une température de l'ordre de 30° avec une pression équivalente au point D.

Un ensemble de refroidissement référencé 7 à la figure 1 comporte une source froide 9 telle que l'eau d'un cours d'eau quelconque coopérant avec un condenseur 8 au niveau duquel le fluide moteur est suffisamment refroidi pour retourner à l'état liquide. En sortie du condenseur 8, le fluide moteur est maintenu en circulation par l'intermédiaire de système de pompage.

Plus précisément, suivant un aspect de l'invention, la zone de circulation du fluide moteur à ce niveau comporte une portion dédoublée 26 dont l'un des segments présente une pompe 11 présentant un premier débit nominal et dont l'autre segment présente une pompe 12 fonctionnant à un deuxième débit.

A titre d'exemple, la pompe 11 apporte un débit de fluide moteur maximum à l'évaporateur 10 dans des conditions d'ensoleillement en été où l'énergie est produite par le champ de panneaux solaires 6 est importante. En hiver, lorsque l'apport thermique est moindre, la turbine 2 peut fonctionner à mi-charge grâce à la pompe 12 alors configurée pour avoir un débit moitié moindre de celui de la pompe 11. Dans d'autres cas, lorsque des pics sont constatés, les pompes 11 et 12 peuvent être actionnées simultanément de sorte à définir un troisième niveau de débit, maximum.

En relation avec l'exemple du propane précité, au point A de la portion dédoublée 26, on obtient une température de l'ordre de 22° Celsius pour une pression de l'ordre de 12 Bars. Le cycle reprend alors avec le passage dans le récupérateur 5 puis l'évaporateur 10.

Du point de vue du circuit de fluide caloporteur, l'exemple de la figure 1 montre l'application d'une pluralité de panneaux solaires avantageusement constitués par des capteurs thermiques de type U c'est à dire présentant une configuration de tuyaux en forme de U qui peuvent être installés en série ou en parallèle de sorte à former un réseau hydraulique sous pression. Une pression d'environ 7 Bars peut convenir et assure le maintien du fluide caloporteur en phase liquide lorsqu'il s'agit d'eau même à des températures pouvant atteindre 150° Celsius.

L'énergie thermique produite par le champ de panneaux solaires 6 est transportée par un réseau hydraulique 13 intégrant une pompe de circulation 16 jusqu'à un réservoir 14 assurant un stockage avantageusement adiabatique. A cet effet, le réservoir 14 sera préférentiellement constitué d'un ou plusieurs réservoirs calorifugés par un isolant 15 tel de la laine de roche.

Avec une capacité de stockage du réservoir de l'ordre de 100 m³ pour une turbine de puissance mécanique de 1 MW on obtient une bonne régulation du cycle de Hirn.

En sortie du réservoir 14, le fluide caloporteur constitue une source chaude 24 pouvant être admise dans un mélangeur 18 dont le fonctionnement sera explicité ci-après.

L'entrée du fluide caloporteur chauffé est conditionnée à l'ouverture d'une vanne 22. Par ailleurs, le mélangeur 18 peut recevoir en entrée un fluide caloporteur froid issu d'une source froide 25, par exemple constituée par la sortie des moyens d'échange thermique. De façon similaire à la source chaude 24, la source froide 25 est commandée en admission dans le mélangeur 18 par l'intermédiaire d'une vanne 23. Ces deux vannes sont contrôlées par des moyens de commande 21 de conception courante recevant une information de température issue d'une sonde thermique 19 située en sortie du mélangeur 18.

Ainsi constituée par le mélangeur 18, les vannes 22 et 23 et les moyens de commande 21, cette portion de l'installation forme des moyens de régulation en température du fluide caloporteur en entrée des moyens d'échanges thermiques avec le fluide moteur. Grâce à cette régulation, l'énergie thermique nécessaire à la vaporisation du fluide moteur injecté à débit constant par les pompes 11, 12 seule ou en combinaison dans l'évaporateur 10 est régulée.

Le débit de fluide caloporteur (tel que de l'eau) est produit par une pompe 20 et assure une introduction en température constante dans l'évaporateur 10. Une température de consigne de l'ordre de 99° Celsius donne entière satisfaction pour la vaporisation du fluide moteur lorsqu'il s'agit de propane. Suivant l'ensoleillement, la température du fluide caloporteur situé dans le réservoir 14 peut varier entre 100° Celsius et 150° Celsius. La sonde 19 située entre le mélangeur 18 et la pompe 20 assure la mesure de la température exacte qui peut être rétrocontrôlée par les moyens de commande 21 des vannes 22, 23. On obtient ainsi un fonctionnement particulièrement régulier ce qui est fondamental pour des installations de dimension conséquente.

On comprend aisément que lorsque la température de sortie du mélangeur 18 est inférieure à la consigne, on commande les vannes 22, 23 pour augmenter la proportion de la source chaude 24.

L'opération inverse est effectuée si la température dépasse la consigne en sortie du mélangeur 18.

### REFERENCES

- 1.: Partie génération électrique
- 2.: Turbine
- 3.: Générateur
- 4.: Réseau électrique
- 5.: Récupérateur
- 6.: Panneaux solaires
- 7.: Partie refroidissement
- 8.: Condenseur
- 9.: Source froide
- 10.: Evaporateur
- 11.: Pompe n°1
- 12.: Pompe n°2
- 13.: Réseau hydraulique
- 14.: Réservoir
- 15.: Isolant
- 16.: Pompe circulation
- 17.: Moyens de régulation
- 18.: Mélangeur
- 19.: Sonde thermique
- 20.: Pompe circulation de l'évaporateur
- 21.: Moyens de commande
- 22.: Vanne source chaude
- 23.: Vanne source froide
- 24.: Source chaude
- 25.: Source froide
- 26.: Portion dédoublée

## Revendications

1. Installation de génération d'énergie électrique comportant :
- un circuit pour un fluide moteur,
- des moyens de chauffage du fluide moteur configurés pour vaporiser le fluide moteur,
- un système à turbine (2) couplé à un générateur (3) électrique, ledit système utilisant la phase vapeur du fluide moteur comme moyen moteur en vue de la production d'énergie,
**caractérisée par le fait que** les moyens de chauffage comportent :
- une pluralité de panneaux solaires (6) aptes à chauffer un fluide caloporteur,
- des moyens d'échange thermique entre le fluide caloporteur et le fluide moteur,
- des moyens de régulation (17) de la température du fluide caloporteur en entrée des moyens d'échanges thermiques, les moyens de régulation (17) comportant un mélangeur (18) en amont des moyens d'échange thermique, le mélangeur (18) ayant une double entrée pour recevoir du fluide caloporteur chauffé et du fluide caloporteur refroidi, l'admission desdits fluides caloporteurs chauffé et refroidi étant contrôlée selon la température de sortie du mélangeur.

2. Installation selon la revendication 1 dans laquelle les moyens de régulation (17) comportent des vannes (22, 23) contrôlant l'admission des fluides caloporteurs chauffé et refroidi et des moyens de commande (21) desdites vannes reliés à une sonde thermique (19) en sortie du mélangeur (18).

3. Installation selon la revendication 1 ou 2 dans laquelle le fluide caloporteur refroidi est issu d'une zone du circuit de fluide caloporteur située en aval des moyens d'échange thermique.

4. Installation selon une quelconque des revendications précédentes dans laquelle les moyens de chauffage comportent un réservoir (14) tampon de stockage de fluide caloporteur chauffé entre la pluralité de panneaux solaires (6) et les moyens d'échange thermique.

5. Installation selon une quelconque des revendications 1 à 4 dans laquelle le circuit de fluide moteur comporte une portion dédoublée (26) en amont des moyens d'échange thermique, chaque segment de la zone dédoublée (26) comportant une pompe (11, 12), les pompes (11, 12) étant de puissance différente.

6. Installation selon la revendication 5 dans laquelle chaque pompe (11, 12) a un débit nominal prédéterminé de sorte à fixer deux régimes de circulation du fluide moteur.

7. Installation selon la revendication 6 dans laquelle les pompes (11, 12) sont configurées pour pouvoir fonctionner simultanément pour fixer un troisième régime de circulation du fluide moteur.

8. Installation selon une quelconque des revendications 1 à 7 comportant un récupérateur (5) configuré pour préchauffer le fluide moteur en amont des moyens de chauffage par échanges thermiques avec le fluide moteur en sortie de turbine (2) et avant sa liquéfaction.

9. Installation selon une quelconque des revendications 1 à 8 dans laquelle les panneaux solaires (6) comportent des capteurs thermiques de type U.
